# EUROPÄISCHE PATENTSCHRIFT

(11) **EP 3 372 351 B1**
(45) Veröffentlichungstag und Bekanntmachung des Hinweises auf die Patenterteilung: **08.04.2020**
(21) Anmeldenummer: 18155211.8
(22) Anmeldetag: 06.02.2018
(51) Int. Cl.: B25J 5/02, B25J 19/00, H02G 11/00, F16G 13/16

(54) **VERFAHRSYSTEM**
TRAVELING SYSTEM
SYSTÈME VOYAGE

(30) Priorität: 08.03.2017 DE 102017104840
(43) Veröffentlichungstag der Anmeldung: 12.09.2018
(73) Patentinhaber: SW Automation GmbH, 88069 Tettnang (DE)
(72) Erfinder: Bartsch, Patrick, 88074 Meckenbeuren (DE)
(74) Vertreter: Schorr, Peter Karl

(56) Entgegenhaltungen:
- DE-A1-102005 027 406
- DE-A1-102008 056 935
- DE-T2- 69 507 102
- DE-U1-202010 001 084

## Beschreibung

Die Erfindung betrifft ein Verfahrsystem für ein Handlinggerät mit mindestens einem Führungsmittel, mit mindestens einem Schlittenkörper, der durch das mindestens eine Führungsmittel zumindest in einer Verfahrebene geführt bewegbar ist und an dem oder auf dem mindestens ein Handlinggerät festlegbar oder festgelegt ist, mit mindestens einem Antriebsmittel durch das der Schlittenkörper für eine Bewegung zumindest entlang des Führungsmittels antreibbar ist, und mit mindestens einer Kabelführung, die mit dem Schlittenkörper verbunden ist, die ein Kabelführungsgehäuse umfasst, das aus einer Mehrzahl von kettengliedartig miteinander gefügten Gehäusegliedern gebildet ist, von denen jeweils zwei benachbarte Gehäuseglieder relativ zueinander und um eine gemeinsame Rotationsachse drehbar sind, und in dem mindestens ein Kabel anordenbar oder angeordnet ist, das mit einem Ende mit dem Handlinggerät verbindbar oder verbunden ist, wobei die gemeinsame Rotationsachse der Gehäuseglieder der Kabelführung senkrecht oder schräg zur Verfahrebene des Schlittenkörpers verläuft.

Ein solches Verfahrsystem ist bekannt aus DE 10 2008 056 935 A1.

Ein anderes Verfahrsystem ist bekannt aus DE 10 2015 001 865 A1, bei dem die gemeinsame Rotationsachse der Gehäuseglieder der Kabelführung parallel zur Verfahrebene des Schlittenkörpers verläuft und die Anbindung der Kabelführung an den Schlittenkörper sowie die Anbindung der Kabelführung an die eine Energieversorgung bezüglich des Schlittenkörpers auf der gleichen Seite angeordnet sind.

Bei einer derartigen Anordnung wird die Kabelführung bis zu einer 180° Kurve in eine Richtung geführt und nach der 180° Kurve in die entgegengesetzte Richtung zurückgeführt. Dabei liegen die von der 180° Kurve zurückverlaufenden Gehäuseglieder auf den zur 180° Kurve hinverlaufenden Gehäusegliedern auf.

Bei dieser Anordnung hat es sich als nachteilig erwiesen, dass die Kabelführung zumindest im Bereich der 180° Kurve einen Wulst bildet, der das Handlinggerät in seiner Bewegung behindern kann.

Darüber verlaufen bei einer solchen Anordnung der Kabelführung die einzelnen Gehäuseglieder derart, dass ihre jeweils offenen Seiten nach oben gerichtet sind, wodurch Verschmutzungen in das Innere der Kabelführung gelangen können.

Eine Aufgabe eines Ausführungsbeispiels der Erfindung ist, ein Verfahrsystem vorzuschlagen, bei dem der Bewegungsspielraum des Handlinggeräts erweitert ist und bei dem die Gefahr eines Verschmutzens der Kabelführung reduziert ist.

Diese Aufgabe wird erfindungsgemäß bei einem eingangs genannten Verfahrsystem dadurch gelöst, dass die Kabelführung und/oder das mindestens eine im Kabelführungsgehäuse angeordnete Kabel zumindest abschnittsweise auf einer ersten Seite des Schlittenkörpers parallel zur Verfahrrichtung des Schlittenkörpers verlaufend angeordnet ist und wenn die Kabelführung und/oder das mindestens eine im Kabelführungsgehäuse angeordnete Kabel auf einer der ersten Seite abgewandten und gegenüberliegenden zweiten Seite des Schlittenkörpers mit dem Schlittenkörper, bzw. mit dem Handlinggerät verbunden, bzw. verbindbar ist.

Mit diesen Merkmalen ist eine platzsparende Anordnung der Kabelführung gewährleistet. Hierbei verläuft die Kabelführung auf der ersten Seite des Schlittenkörpers parallel zur Verfahrrichtung und quert das Führungsmittel in einer 180°-Kurve um die gemeinsame Rotationsachse, um auf der zweiten Seite des Schlittenkörpers wieder parallel zur Verfahrrichtung in Richtung Schlittenkörper zu verlaufen.

Dadurch, dass die Rotationsachsen der Gehäuseglieder der Kabelführung senkrecht oder schräg zur Verfahrebene des Schlittenkörpers verläuft, ist die Kabelführung stets in einer zur Verfahrebene parallel oder schräg verlaufenden Ebenen angeordnet, ohne dass sich die Kabelführung in einem Bereich senkrecht zur Verfahrebene wulstartig übereinander türmt. Hierdurch wird die Gefahr einer Behinderung des Handlinggeräts durch die Kabelführung reduziert und die Bewegungsfreiheit des Handlinggeräts erhöht.

Quer zur Rotationsachsenrichtung umfassen die Gehäuseglieder geschlossene Wandungen. Durch die erfindungsgemäße Anordnung der Kabelführung ist zusätzlich die Gefahr eines Eindringens von Verschmutzungen in die Kabelführung senkrecht zur Verfahrebene reduziert.

Das Verfahrsystem kann eine Baugruppe einer Werkstück-BearbeitungsAnlage umfassen, bei der das Handlinggerät eine oder mehrere Werkzeugmaschinen beispielsweise über mindestens eine Be- und Entladeöffnung mit Werkstücken und oder Werkzeugen versorgen kann.

Das Handlinggerät kann drei, vier, fünf, sechs oder mehrachsig ausgestaltet sein oder der eine die entsprechenden Freiheitsgrade realisierende Achskinematik aufweist. Ferner kann das Handlinggerät einen Manipulator, einen Roboter oder dergleichen umfassen.

Jeweils zwei benachbarte Gehäuseglieder können über jeweils eine Drehachse miteinander gefügt sein. Darüber hinaus können die einzelnen Gehäuseglieder durch eine Achskinematik, insbesondere ohne Drehachse, miteinander gefügt sein.

Bei einer Ausführungsform des Verfahrsystems erweist es sich als vorteilhaft, wenn die Kabelführung und/oder das mindestens eine im Kabelführungsgehäuse angeordnete Kabel auf der ersten Seite des Schlittenkörpers an einem ortsfest an dem Führungsmittel angeordneten Anschlussmittel festgelegt ist, durch das das Kabel mit einer Energieversorgung koppelbar ist.

Durch das am Führungsmittel festgelegte Anschlussmittel kann das Kabel mit Energie versorgt werden. Hierbei ist es grundsätzlich denkbar, dass über das Kabel elektrische Energie vom Anschlussmittel zum Schlittenkörper und/oder dem daran bzw. darauf angeordneten Handlinggerät und/oder Antriebsmittel transportiert wird. Darüber hinaus ist es auch denkbar, dass zusätzlich zu dem Kabel oder anstelle des Kabels ein Schlauch oder ein flexibel biegbares Rohr in der Kabelführung angeordnet ist, über das der Schlittenkörper, das Handlinggerät und/oder das Antriebsmittel hydraulisch und/oder pneumatisch antreibbar sind.

Es erweist sich als vorteilhaft, wenn mindestens eines der Gehäuseglieder zumindest eine im Wesentlichen parallel zur Verfahrebene verlaufenden Gehäusewand aufweist, die auf der dem Kabel abgewandten Seite eine konturierte, insbesondere wellige oder noppenartige, Oberflächenstruktur umfasst, mit der das Gehäuseglied auf dem Führungsmittel und/oder einem Tragmittel aufliegt.

Dadurch, dass die parallel zur Verfahrebene verlaufende Gehäusewand eine wellige oder noppenartige Oberflächenstruktur umfasst, ist die Reibung zwischen der Kabelführung und dem Führungsmittel, bzw. dem Tragmittel reduziert. Darüber hinaus wird durch die konturierte Oberflächenstruktur der Abrieb der Kabelführung reduziert, wodurch das Verfahrsystem wartungsarm ist.

Um die Gefahr eines Verschmutzens der Kabelführung weiter zu reduzieren erweist es sich als vorteilhaft, wenn das Verfahrsystem mindestens einen auf der ersten Seite des Führungsmittels und/oder auf der zweiten Seite des Führungsmittels angeordneten Schutzkörper aufweist, der im Wesentlichen parallel zur Verfahrrichtung erstreckt ist, in dem die Kabelführung zumindest abschnittsweise anordenbar oder angeordnet ist und der die Kabelführung zumindest in Richtung parallel oder schräg zur Verfahrebene überfängt.

In Weiterbildung letztgenannter Ausführungsform erweist es sich als vorteilhaft, wenn der Schutzkörper einen offenen u-förmigen Querschnitt umfasst, der auf der dem Führungsmittel zugewandten Seite geöffnet ist und/oder wenn der Schutzkörper ein Blechbiegeteil umfasst. Solchenfalls ist der Schutzkörper einfach und kostengünstig realisierbar.

Ferner kann der Schutzkörper den Tragkörper, an dem die Kabelführung an- oder aufliegt, umfassen.

Darüber hinaus erweist es sich als vorteilhaft, wenn das Verfahrsystem mindestens eine am Schlittenkörper angeordnete Schutzplatte umfasst, die in Richtung der gemeinsamen Rotationsachse der Gehäuseglieder der Kabelführung erstreckt ist und die die Kabelführung zumindest abschnittsweise überfängt.

Durch das Vorsehen einer Schutzplatte am Schlittenkörper wird der Bereich der Kabelführung, der die erste Seite des Schlittenkörpers durch einen 180°-Bogen, in dem die Kabelführung das Führungsmittel quert, um auf der zweiten Seite des Schlittenkörpers zu verlaufen, überfangen, wenn der Schlittenkörper einen Abstand zur 180°-Kurve der Kabelführung umfasst, der geringer ist als die Länge der Schutzplatte. Hierdurch schirmt die Schutzplatte die Kabelführung gegen Verschmutzung ab, wenn der Schlittenkörper und hierdurch das auf dem Schlittenkörper angeordnete Handlinggerät in der Nähe der 180°-Kurve der Kabelführung angeordnet sind. Solchenfalls lässt sich die Gefahr eines Verschmutzens der Kabelführung weiter reduzieren.

Darüber hinaus kann das Verfahrsystem mindestens einen Träger, an dem das mindestens eine Führungsmittel, das Tragmittel, der Schutzkörper und/oder die Kabelführung anordenbar oder angeordnet ist umfassen, der am Boden, insbesondere stufenlos oder ebenerdig, oder durch mindestens einen Stützkörper zum Boden beabstandet, festgelegt ist.

Das Tragmittel kann durch den Träger gebildet sein.

Das Führungsmittel kann grundsätzlich beliebig ausgebildet sein, solange es die Funktion erfüllt, den Schlittenkörper in seiner Bewegung zu führen. Das Führungsmittel lässt sich einfach ausbilden, wenn das Führungsmittel mindestens eine in Verfahrrichtung erstreckte Schiene umfasst, auf der der Schlittenkörper in Verfahrrichtung entlanggleitbar ist.

Ferner kann das Führungsmittel zwei parallel zueinander verlaufende Schienen umfassen.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen des Verfahrsystems.

In der Zeichnung zeigt:
- Figur 1: Eine perspektivische Seitenansicht auf ein erstes Ausführungsbeispiel des Verfahrsystems;
- Figur 2: Eine perspektivische Seitenansicht auf ein zweites Ausführungsbeispiel des Verfahrsystems in einer ersten Endstellung;
- Figur 3: Eine perspektivische Seitenansicht auf das zweite Ausführungsbeispiel des Verfahrsystems in einer zweiten Endstellung;
- Figur 4: Eine perspektivische Seitenansicht auf ein drittes Ausführungsbeispiels des Verfahrsystems;
- Figur 5: Eine Draufsicht auf ein viertes Ausführungsbeispiel des Verfahrsystems;
- Figur 6: Eine perspektivische Seitenansicht auf eine Kabelführung;
- Figur 7a: Eine detaillierte Seitenansicht auf einen Bereich der Kabelführung gemäß Figur 6;
- Figur 7b: Eine Draufsicht auf einen Bereich der Kabelführung gemäß Figur 6.

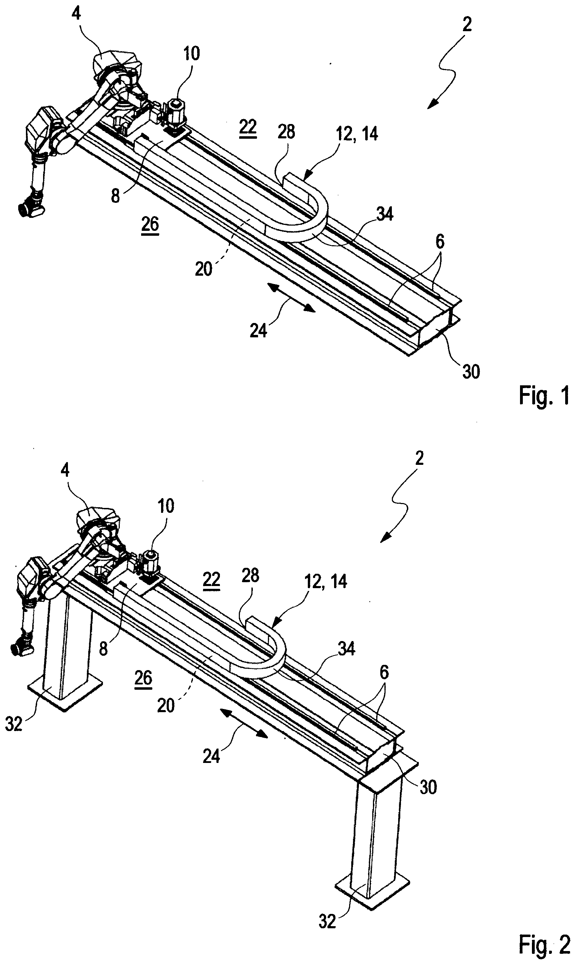

Die Figuren 1 bis 5 zeigen ein insgesamt mit dem Bezugszeichen 2 versehenes Verfahrsystem. Das Verfahrsystem 2 ist dazu geeignet, ein Handlinggerät 4 zu transportieren. Hierzu umfasst das Verfahrsystem 2 ein Führungsmittel 6 sowie einen Schlittenkörper 8, der durch das Führungsmittel 6 zumindest in einer Verfahrebene geführt bewegbar ist. Auf dem Schlittenkörper 8 ist der Handlinggerät 4 festgelegt. Darüber hinaus umfasst das Verfahrsystem 2 ein Antriebsmittel 10, durch das der Schlittenkörper 8 für eine Bewegung zumindest entlang des Führungsmittels 6 antreibbar ist.

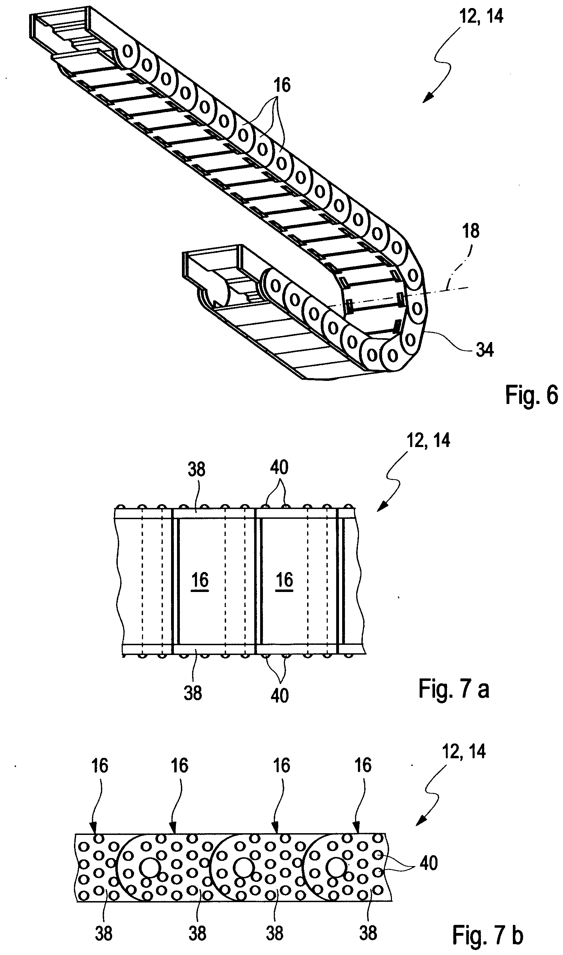

Weiter umfasst das Verfahrsystem 2 eine Kabelführung 12, die mit dem Schlittenkörper 8 verbunden ist und die ein Kabelführungsgehäuse 14 umfasst, das aus einer Mehrzahl von kettengliedartig miteinander gefügten Gehäusegliedern 16 (in den Figuren 6, 7a und 7b dargestellt) gebildet ist, von denen jeweils zwei benachbarte Gehäuseglieder 16 um jeweils eine zwischen den beiden benachbarten Gehäusegliedern 16 angeordnete Rotationsachse 18 relativ zueinander drehbar sind. In der Kabelführung 12, bzw. in dem Kabelführungsgehäuse 14 der Kabelführung 12 ist mindestens ein Kabel 20 anordenbar, das mit einem Ende mit dem Handlinggerät 4 verbindbar oder verbunden ist (in den Figuren durch das Kabelführungsgehäuse 14 verdeckt).

Insbesondere in Figur 6 ist ersichtlich, dass die Rotationsachse 18 der Gehäuseglieder 16 der Kabelführung 12 senkrecht zur Verfahrebene des Schlittenkörpers 8 verläuft.

Die Figuren 1 bis 5 zeigen Ausführungsbeispiele, bei denen die Kabelführung 12 erfindunsgemäß zumindest abschnittsweise auf einer ersten Seite 22 des Schlittenkörpers 8 parallel zur Verfahrrichtung 24 des Schlittenkörpers 8 verlaufend angeordnet ist und auf einer der ersten Seite 22 abgewandten, gegenüberliegenden zweiten Seite 26 des Schlittenkörpers 8 mit dem Schlittenkörper 8, bzw. mit dem Handlinggerät 4 verbunden ist.

Die Kabelführung 12 und das mindestens eine im Kabelführungsgehäuse 14 angeordnete Kabel 20 sind auf der ersten Seite 22 des Schlittenkörpers 8 an einem ortsfest am Führungsmittel 6 angeordneten Anschlussmittel 28 festgelegt, wobei das Kabel 20 über das Anschlussmittel 28 mit einer Energieversorgung verbunden ist.

Figur 1 zeigt ein erstes Ausführungsbeispiel das Verfahrsystems 2, bei dem das Führungsmittel 6, der Schlittenkörper 8 und die Kabelführung 12 an oder auf einem Träger 30 festgelegt sind, der an einem Boden, insbesondere stufenlos oder ebenerdig, festgelegt ist.

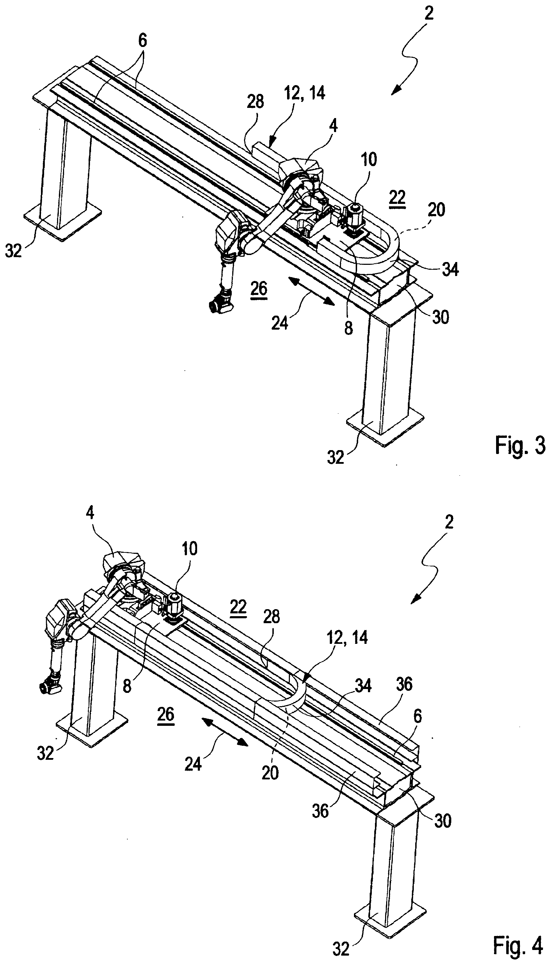

Die Figuren 2 und 3 zeigen ein zweites Ausführungsbeispiel des Verfahrsystems 2, bei dem der Träger 30 mittels zweier Stützkörper 32 zum Boden beabstandet ist. Solchenfalls sind Werkzeugmaschinen durch das Handlinggerät 4 leichter von oben zu bestücken.

Figur 2 zeigt das Verfahrsystem 2 in einer ersten Endstellung. In dieser verläuft die Kabelführung 12 im Wesentlichen überwiegend auf der zweiten Seite 26 des Schlittenkörpers 8 und der Abstand des Schlittenkörpers 8 zu einer 180°-Kurve 34 der Kabelführung 12 ist maximal. Entsprechend ist die Erstreckung der Kabelführung 12 in dieser Position des Schlittenkörpers 8 auf der ersten Seite 22 des Schlittenkörpers 8 minimal.

Figur 3 zeigt das Verfahrsystem 2 gemäß Figur 2 in einer zweiten Endstellung. In dieser ist der Abstand des Schlittenkörpers 8 zur 180°-Kurve 34 der Kabelführung 12 minimal. Die Erstreckung der Kabelführung 12 auf der zweiten Seite 26 des Schlittenkörpers 8 ist minimal und die Erstreckung der Kabelführung 12 auf der ersten Seite 22 des Schlittenkörpers 8 ist maximal.

Figur 4 zeigt ein drittes Ausführungsbeispiel des Verfahrsystems 2, bei dem zusätzlich auf der ersten Seite 22 und auf der zweiten Seite 26 des Schlittenkörpers 8 ein Schutzkörper 36 angeordnet ist. Dieser umfasst im Wesentlichen einen u-förmigen Querschnitt, in dem die Kabelführung 12 angeordnet ist. Hierbei wird die Kabelführung 12 durch den Schutzkörper 36 im Wesentlichen parallel oder schräg zur Verfahrebene überfangen.

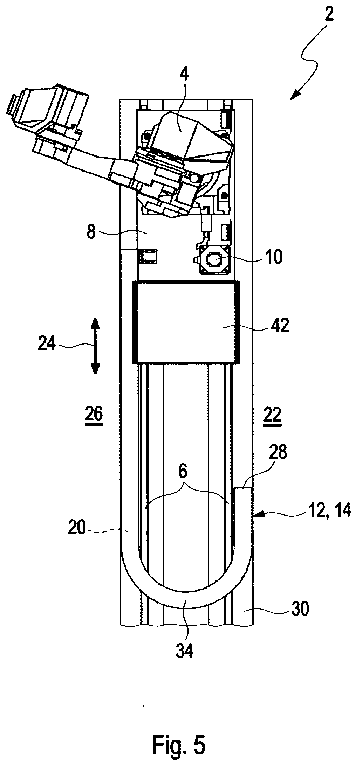

Figur 5 zeigt ein viertes Ausführungsbeispiel des Verfahrsystems 2, bei dem eine am Schlittenkörper 8 angeordnete und in Richtung der Kabelführung 12, insbesondere in Richtung der 180°-Kurve 34 der Kabelführung 12, erstreckter Schutzplatte 42 festgelegt ist. Die Schutzplatte 42 überfängt die 180°-Kurve 34 der Kabelführung 12 von oben, wenn sich der Schlittenkörper 8 in der zweiten Endstellung gemäß Figur 3 befindet.

Figur 6 zeigt eine isolierte Darstellung der Kabelführung 12. Hierbei ist die Mehrzahl von kettengliedartig miteinander gefügten Gehäuseglieder 16 ersichtlich. Diese verlaufen auf der ersten Seite 22 des Schlittenkörpers 8 im Wesentlichen parallel zur Verfahrrichtung 24, das Gleiche gilt für die Anordnung der Kabelführung 12 auf der zweiten Seite 26 des Schlittenkörpers 8. Dadurch, dass die Gehäuseglieder 16 jeweils mit einer gemeinsamen angeordneten Rotationsachse 18 relativ zueinander drehbar sind, ist eine 180°-Kurve 34 vom Wechsel von der ersten Seite 22 des Schlittenkörpers 8 auf die zweite Seite 26 des Schlittenkörpers 8 in einer zur Verfahrebene parallelen Ebene ermöglicht. Die einzelnen Gehäuseglieder 16 sind auf der dem Schlittenkörper 8 zugewandten Seite zumindest bereichsweise offen, um relativ zueinander bewegt werden zu können.

Die Figuren 7a und 7b zeigen eine Seitenansicht (Figur 7a) und eine Draufsicht (Figur 7b) auf einen Bereich der Kabelführung 12. Die Gehäuseglieder 16 weisen an ihren Gehäusewänden 38 konturierte Oberflächenstrukturen 40 auf, mit der die jeweiligen Gehäuseglieder 16 auf dem Führungsmittel 6 und/oder auf einem Tragmittel, beispielsweise dem Träger 30 oder dem Schutzkörper 36 aufliegen.

### Bezugszeichenliste

- 2: Verfahrsystem
- 4: Handlinggerät
- 6: Führungsmittel
- 8: Schlittenkörper
- 10: Antriebsmittel
- 12: Kabelführung
- 14: Kabelführungsgehäuse
- 16: Gehäuseglieder
- 18: Rotationsachse
- 20: Kabel
- 22: erste Seite des Schlittenkörpers
- 24: Verfahrrichtung
- 26: zweite Seite des Schlittenkörpers
- 28: Anschlussmittel
- 30: Träger
- 32: Stützkörper
- 34: 180°-Kurve
- 36: Schutzkörper
- 38: Gehäusewand
- 40: Oberflächenstruktur
- 42: Schutzplatte

## Patentansprüche

1. Verfahrsystem (2) für ein Handlinggerät (4) mit mindestens einem Führungsmittel (6), mit mindestens einem Schlittenkörper (8), der durch das mindestens eine Führungsmittel (6) zumindest in einer Verfahrebene geführt bewegbar ist und an dem oder auf dem mindestens ein Handlinggerät (4) festlegbar oder festgelegt ist, mit mindestens einem Antriebsmittel (10) durch das der Schlittenkörper (8) für eine Bewegung zumindest entlang des Führungsmittels (6) antreibbar ist, und mit mindestens einer Kabelführung (12), die mit dem Schlittenkörper (8) verbunden ist, die ein Kabelführungsgehäuse (14) umfasst, das aus einer Mehrzahl von kettengliedartig miteinander gefügten Gehäusegliedern (16) gebildet ist, von denen jeweils zwei benachbarte Gehäuseglieder (16) relativ zueinander und um eine gemeinsame Rotationsachse (18) drehbar sind, und in dem mindestens ein Kabel (20) anordenbar oder angeordnet ist, das mit einem Ende mit dem Handlinggerät (4) verbindbar oder verbunden ist, wobei die gemeinsame Rotationsachse (18) der Gehäuseglieder (16) der Kabelführung (12) senkrecht oder schräg zur Verfahrebene des Schlittenkörpers (8) verläuft, **dadurch gekennzeichnet, dass** die Kabelführung (12) und/oder das mindestens eine im Kabelführungsgehäuse (14) angeordnete Kabel (20) zumindest abschnittsweise auf einer ersten Seite (22) des Schlittenkörpers (8) parallel zur Verfahrrichtung (24) des Schlittenkörpers (8) verlaufend angeordnet ist und dass die Kabelführung (12) und/oder das mindestens eine im Kabelführungsgehäuse (14) angeordnete Kabel (20) auf einer der ersten Seite (22) abgewandten und gegenüberliegenden zweiten Seite (26) des Schlittenkörpers (8) mit dem Schlittenkörper (8), bzw. mit dem Handlinggerät (4) verbunden, bzw. verbindbar ist.

2. Verfahrsystem (2) nach Anspruch 1, **dadurch gekennzeichnet, dass** die Kabelführung (12) und/oder das mindestens eine im Kabelführungsgehäuse (14) angeordnete Kabel (20) auf der ersten Seite (22) des Schlittenkörpers (8) an einem ortsfest an dem Führungsmittel (6) angeordneten Anschlussmittel (28) festgelegt ist, durch das das Kabel (20) mit einer Energieversorgung koppelbar ist.

3. Verfahrsystem (2) nach Anspruch 1 oder 2, **dadurch gekennzeichnet, dass** mindestens eines der Gehäuseglieder (16) zumindest eine im Wesentlichen parallel zur Verfahrebene verlaufenden Gehäusewand (38) aufweist, die auf der dem Kabel (20) abgewandten Seite eine konturierte, insbesondere wellige oder noppenartige, Oberflächenstruktur (40) umfasst, mit der das Gehäuseglied (16) auf dem Führungsmittel (6) und/oder einem Tragmittel aufliegt.

4. Verfahrsystem (2) nach mindestens einem der vorhergehenden Ansprüche, **gekennzeichnet durch** mindestens einen auf der ersten Seite (22) des Führungsmittels (6) und/oder auf der zweiten Seite (26) des Führungsmittels (6) angeordneten Schutzkörper (36), der im Wesentlichen parallel zur Verfahrrichtung (24) erstreckt ist, in dem die Kabelführung (12) zumindest abschnittweise anordenbar oder angeordnet ist und der die Kabelführung (12) zumindest in Richtung parallel oder schräg zur Verfahrebene überfängt.

5. Verfahrsystem (2) nach Anspruch 4, **dadurch gekennzeichnet, dass** der Schutzkörper (36) einen offenen u-förmigen Querschnitt umfasst, der auf der dem Führungsmittel (6) zugewandten Seite geöffnet ist und/oder dass der Schutzkörper (36) ein Blechbiegeteil umfasst.

6. Verfahrsystem (2) nach mindestens einem der vorhergehenden Ansprüche, **gekennzeichnet durch** mindestens eine am Schlittenkörper (8) angeordnete Schutzplatte (42), die in Richtung der gemeinsamen Rotationsachse (18) der Gehäuseglieder (16) der Kabelführung (12) erstreckt ist und die die Kabelführung (12) zumindest abschnittsweise überfängt.

7. Verfahrsystem (2) nach mindestens einem der vorhergehenden Ansprüche, **gekennzeichnet durch** mindestens einen Träger (30), an dem das mindestens eine Führungsmittel (6) das Tragmittel, der Schutzkörper (36) und/oder die Kabelführung (12) anordenbar oder angeordnet ist, der am Boden, insbesondere stufenlos oder ebenerdig, oder durch mindestens einen Stützkörper (32) zum Boden beabstandet festgelegt ist.

8. Verfahrsystem (2) nach mindestens einem der vorhergehenden Ansprüche, **dadurch gekennzeichnet, dass** das Führungsmittel (6) mindestens eine in Verfahrrichtung (24) erstreckte Schiene umfasst, auf der der Schlittenkörper (8) in Verfahrrichtung entlanggleitbar ist.

## Claims

1. Transport system (2) for a handling device (4) with at least one guide means (6), with at least one carriage body (8) which can be moved by at least one guide means (6) in at least one plane of movement and above or on which at least one handling device (4) can be fixed or is fixed, with at least one drive means (10) through which the carriage body (8) can be driven for movement at least along the guide means (6), and with at least one cable guide (12) which is connected to the carriage body (8) which comprises a cable guide housing (14) which is formed from a plurality of housing chain-link like housing links (16) joined together, each of which two adjacent housing members (16) can be rotated relative to one another and about a common axis of rotation (18), and in which at least one cable (20) can be arranged or is arranged, which can be connected or is connected at one end to the handling device (4), whereby the common axis of rotation (18) of the housing members (16) of the cable guide (12) runs perpendicular or oblique to the plane of travel of the carriage body (8), **characterised in that** the cable guide (12) and/or the at least one cable (20) arranged in the cable guide housing (14) is arranged at least in sections on a first side (22) of the carriage body (8) parallel to the direction of travel (24) of the carriage body (8) and that the cable guide (12) and/or the at least one cable (20) arranged in the cable guide housing (14) is connected or connectible on a second side (26) of the carriage body (8) with the slide body (8) or the handling device (4).

2. Transport system (2) according to claim 1, **characterised in that** the cable guide (12) and/or the at least one cable (20) arranged in the cable guide housing (14) is fixed on the first side (22) of the carriage body (8) on a stationary on a connection means (28) arranged on the guide means (6) through which the cable (20) can be coupled to an energy supply.

3. Transport system (2) according to claim 1 or 2, **characterised in that** at least one of the housing members (16) has at least one housing wall (38) which runs essentially parallel to the travel plane and which has a contoured, in particular wavy or knob-like surface structure (40) on the side facing away from the cable (20) with which the housing member (16) rests on the guide means (6) and/or a suspension element.

4. Transport system (2) according to at least one of the preceding claims, **characterised by** at least one protective body (36) arranged on the first side (22) of the guide means (6) and/or on the second side (26) of the guide means (6) which is extended essentially parallel to the direction of travel (24), in which the cable guide (12) can be arranged or is arranged at least in sections and which extends over the cable guide (12) at least in the direction parallel or obliquely to the travel plane.

5. Transport system (2) according to claim 4, **characterised in that** the protective body (36) comprises an open U-shaped cross section which is open on the side facing the guide means (6) and/or that the protective body (36) comprises a bent sheet metal part.

6. Transport system (2) according to at least one of the preceding claims, **characterised by** at least one protective plate (42) arranged on the carriage body (8), which extends in the direction of the common axis of rotation (18) of the housing members (16) of the cable guide (12) and which extends over the cable guide (12) at least in sections.

7. Transport system (2) according to at least one of the preceding claims, **characterised by** at least one carrier (30) on which the at least one guide means (6), the support means, the protective body (36) and/or the cable guide (12) can be arranged or is arranged, which is fixed on the floor, in particular steplessly or at ground level, or at a distance from the floor by at least one support body (32).

8. Transport system (2) according to at least one of the preceding claims, **characterised in that** the guide means (6) comprises at least one rail extending in the direction of travel (24), on which the carriage body (8) can be slid along in the direction of travel.

## Revendications

1. Système de déplacement (2) pour un dispositif de manutention (4) avec au moins un moyen de guidage (6), avec au moins un corps coulissant (8) pouvant être déplacé par au moins un moyen de guidage (6) sur au moins un plan de déplacement et pouvant être fixé ou étant fixé sur le ou sur le au moins un dispositif de manutention (4), avec au moins un moyen d'entraînement (10) grâce auquel le corps coulissant (8) peut être entraîné pour se déplacer au moins le long du moyen de guidage (6) et avec au moins un guide-câble (12) raccordé au corps coulissant (8) comprenant un boîtier de guide-câble (14), composé d'une pluralité d'éléments de boîtier (16), assemblés à la manière d'un maillon de chaîne et dont respectivement deux éléments de boîtier adjacents (16) peuvent être tournés l'un par rapport à l'autre et autour d'un axe de rotation commun (18), et dans lequel au moins un câble (20) peut être disposé ou est disposé et peut être raccordé ou est raccordé à une extrémité au dispositif de manutention (4), l'axe de rotation commun (18) des éléments de boîtier (16) du guide-câble (12) étant perpendiculaire ou oblique au plan de déplacement du corps coulissant (8), **caractérisé en ce que** le guide-câble (12) et/ou le au moins un câble (20) disposé dans le boîtier de guide-câble (14) est placé au moins par sections sur un premier côté (22) du corps coulissant (8) parallèlement au sens de déplacement (24) du corps coulissant (8) et **en ce que** le guide-câble (12) et/ou le au moins un câble (20) disposé dans le boîtier de guide-câble (14) est raccordé ou peut être raccordé au corps coulissant (8) ou au dispositif de manutention (4) sur un côté opposé au premier côté (22) et sur un deuxième côté opposé (26) du corps coulissant (8).

2. Système de déplacement (2) selon la revendication 1, **caractérisé en ce que** le guide-câble (12) et/ou le au moins un câble (20) disposé dans le boîtier de guide-câble (14) est fixé sur le premier côté (22) du corps coulissant (8) à un moyen de raccordement (28) placé dans une position fixe sur le moyen de guidage (6), moyen de raccordement grâce auquel le câble (20) peut être couplé à une alimentation en énergie.

3. Système de déplacement (2) selon la revendication 1 ou 2, **caractérisé en ce que** au moins un des éléments de boîtier (16) présente au moins une paroi de boîtier (38) placée essentiellement parallèlement au plan de déplacement et qui comprend, sur le côté opposé au câble (20), une structure de surface (40) profilée, notamment ondulée ou en forme de bouton grâce à laquelle l'élément de boîtier (16) repose sur le moyen de guidage (6) et/ou sur un moyen de support.

4. Système de déplacement (2) selon au moins l'une des revendications précédentes, **caractérisé par** au moins un corps de protection (36), disposé sur le premier côté (22) du moyen de guidage (6) et/ou sur le deuxième côté (26) du moyen de guidage (6), qui s'étend sensiblement parallèlement au sens de déplacement (24), dans lequel le guide-câble (12) peut être disposé ou est disposé au moins par sections et qui chevauche le guide-câble (12) au moins dans la direction parallèle ou oblique au plan de déplacement.

5. Système de déplacement (2) selon la revendication 4, **caractérisé en ce que** le corps de protection (36) comprend une section transversale ouverte en forme de U, qui s'ouvre sur le côté faisant face au moyen de guidage (6) et/ou **en ce que** le corps de protection (36) comprend une pièce en tôle pliée.

6. Système de déplacement (2) selon au moins l'une des revendications précédentes, **caractérisé par** au moins une plaque de protection (42), disposée sur le corps coulissant (8), qui s'étend dans le sens de l'axe de rotation commun (18) des éléments de boîtier (16) du guide-câble (12) et qui chevauche le guide-câble (12) au moins par sections.

7. Système de déplacement (2) selon au moins l'une des revendications précédentes, **caractérisé par** au moins un support (30), sur lequel le au moins un moyen de guidage (6), le moyen de support, le corps de protection (36) et/ou le guide-câble (12) peut être disposé ou est disposé, qui est fixé au sol, en particulier en continu ou au niveau du sol, ou via au moins un corps de support (32) espacé du sol.

8. Système de déplacement (2) selon au moins l'une des revendications précédentes, **caractérisé en ce que** le moyen de guidage (6) comprend au moins un rail s'étendant dans le sens de déplacement (24), sur lequel le corps coulissant (8) peut coulisser dans le sens de déplacement.
